**Europäisches Patentamt**

**European Patent Office**

**Office européen des brevets**

(11) Veröffentlichungsnummer: **0 246 525**

**A1**

(12) # EUROPÄISCHE PATENTANMELDUNG

(21) Anmeldenummer: **87106765.8**

(22) Anmeldetag: **09.05.87**

(51) Int. Cl.³: **B 65 G 63/00**
**B 65 G 65/20, A 01 F 25/00**

(30) Priorität: **14.05.86 DE 3616211**

(43) Veröffentlichungstag der Anmeldung:
**25.11.87 Patentblatt 87/48**

(84) Benannte Vertragsstaaten:
**BE DE FR GB NL**

(71) Anmelder: **Oppermann + Deichmann Inh. Reinhard**
**Lippe Maschinenfabrik**
**Pfingststrasse 12**
**D-3300 Braunschweig(DE)**

(72) Erfinder: **Voigt, Dietmar**
**David Mausfeldweg 11**
**D-3300 Braunschweig(DE)**

(72) Erfinder: **Lippe, Reinhard, Dipl.-Ing.**
**Auf dem Anger 9**
**D-3300 Braunschweig(DE)**

(74) Vertreter: **Döring, Rudolf, Dr.-Ing.**
**Patentanwälte Dr.-Ing. R. Döring Dipl.-Phys. Dr. J. Fricke**
**Jasperallee 1a**
**D-3300 Braunschweig(DE)**

(54) **Offener Silo für Feldfrüchte, insbesondere Zuckerrüben.**

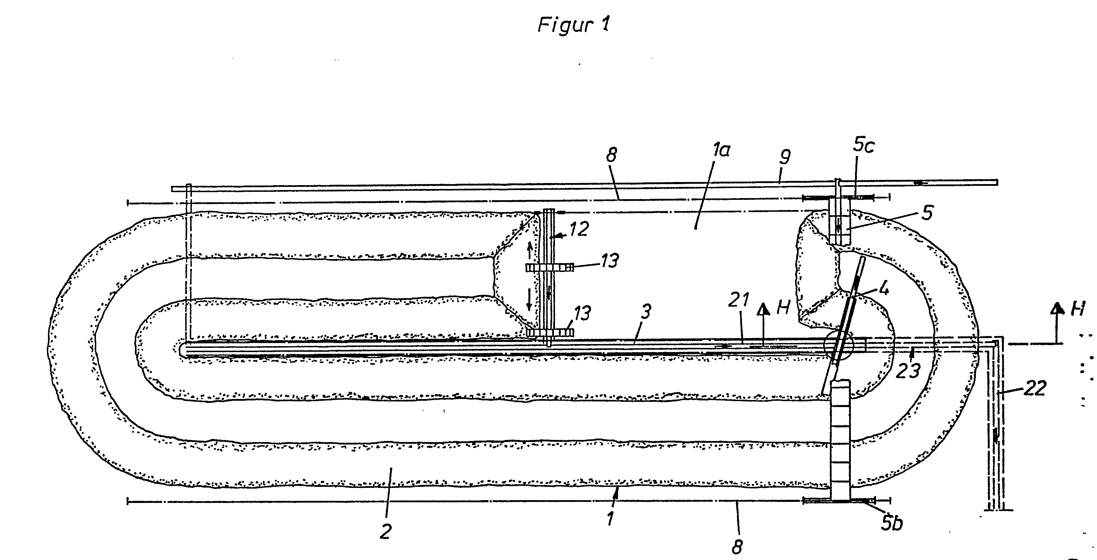

(57) Der offene Silo für Feldfrüchte mit einer in der Draufsicht hypodromartig verlaufenden Lagerfläche (1) ist zur Beschickung mit einer sich über die gesamte Breite des Silos erstreckenden Brücke (5) mit einem diesem zugeordneten schwenkbar gehaltenen und längs zu sich selbst verfahrbaren Ablegeband (4) sowie für die Rücknahme der Feldfrüchte von der Lagerfläche mit einer längs der gesamten Lagerfläche sowie diese quer überspannende und unter die Brücke mit dem Ablegeband hindurch verfahrbare Rücknahmebrücke (12) mit wenigstens einem längs der Brücke verfahrbaren und rotierbar antreibbaren Schaufelrad (13; 14) ausgerüstet. In Mittellängsrichtung des Silos ist ein Förderband (21) für die Rückführung der aufgenommenen Feldfrüchte vorgesehen, welches sich durch einen Düker (23) unter die Lagerfläche hindurch zu einem Weiterförderer (22) außerhalb des Silos erstreckt (Fig. 1).

Figur 1

EP 0 246 525 A1

Oppermann + Deichmann
Inh.: Reinhard Lippe
Maschinenfabrik
Pfingststr. 12

3300 Braunschweig

## Offener Silo für Feldfrüchte, insbesondere Zuckerrüben

Die Erfindung betrifft einen offenen Silo für Feldfrüchte, insbesondere Zuckerrüben, mit einer in der Draufsicht eine langgestreckte Freifläche umschließenden hypodromartig verlaufenden Lagerfläche, einem längsseitigen Zubringerförderer, einer die Lagerfläche überspannenden Brücke mit einem vom Zubringerförderer beschickbaren Brückenförderer und einem an der Brücke schwenkbaren und längs zu sich selbst verfahrbaren Ablegeband sowie einer längs der Lagerfläche verfahrbaren Rücknahmeeinrichtung, die mit einer in Mittellängsrichtung des Silos verlaufenden Abfördereinrichtung zusammenwirkt.

Es sind Silos der vorgenannten Art bekannt, die in langgestreckter Ausführung eine große Aufnahmekapazität aufweisen und ein großes sowie in weiten Grenzen veränderbares Puffervolumen an Feldfrüchten aufnehmen können, so daß unabhängig von der jeweiligen Anlieferung der Feldfrüchte stets eine gleichmäßige Menge pro Zeiteinheit der Weiterverarbeitung zugeführt werden kann.

Die Lagerfläche kann dabei bis auf einen sich in ihrer Längsrichtung ändernden Freiraum kontinuierlich beschickt und abgeräumt werden. Die Zuführung der Feldfrüchte erfolgt dabei über die Brücke und das daran gehaltene schwenkbare Ablegeband in der Weise, daß der auf der Lagerfläche befindliche Guthaufen im Sinne einer Verkleinerung des Freiraumes vorwachsend beschickt wird, während die Rücknahmeeinrichtung im Sinne einer Vergrößerung des Freiraumes gleichzeitig eine Abräumung der Lagerfläche bewirkt. Werden mehr Feldfrüchte in den Silo überführt als gleichzeitig auch entnommen werden, so wird der Freiraum der Lagerfläche kontinuierlich kleiner, während umgekehrt bei geringerer oder stoppender Zufuhr der Feldfrüchte bei kontinuierlichem Abtrag des Guthaufens die Freifläche größer wird.

Bei den bekannten Silos erfolgt die Rücknahme in der Regel mit Hilfe verfahrbarer Spritzeinrichtungen, welche die Feldfrüchte zusammen mit dem Spritzwasser in Schwemmkanäle überführen, welche die Abfördereinrichtungen bilden.

Die beschriebenen Silos mit hypodromartig verlaufenden Lagerflächen haben den großen Vorteil, daß neben der Erzielung eines großen Puffervolumens, welches insbesondere bei der Verarbeitung von Zuckerrüben von Bedeutung ist, stets diejenigen Feldfrüchte abgeführt werden, welche die längste Lagerzeit im Silo hinter sich haben.

Bei den bekannten Silos erstreckt sich die zur Einlagerung der Feldfrüchte mit dem Ablegeband ausgerüstete

Brücke quer über die jeweilige Lagerfläche und wird längs der Lagerfläche verfahren bzw. an den Enden des Silos verschwenkt. Hierdurch wird es erforderlich, beiderseits des Silos Zubringerförderer oder aber in Mittellängsrichtung des Silos einen Zubringerförderer in Höhe der genannten Brücke anzuordnen. Hierdurch ergeben sich erhebliche bauliche Probleme, die noch vergrößert werden, wenn die Rücknahmeeinrichtung in Form einer Spritzbrücke ausgerüstet ist, die ebenfalls längs der Lagerfläche verfahrbar und an den Enden des Silos verschwenkbar geführt werden muß.

Der Erfindung liegt die Aufgabe zugrunde, einen Silo der eingangs beschriebenen Art so auszubilden, daß eine trockene Rückführung der Feldfrüchte aus dem Silo ermöglicht und jede Kollosion der Rücknahmeeinrichtung mit der Beschickungseinrichtung bei geringem baulichem Aufwand vermieden wird.

Zur Lösung vorstehender Aufgabe kennzeichnet sich der einleitend näher beschriebene Silo erfindungsgemäß dadurch, daß die mit dem Ablegeband ausgerüstete Brücke sich über die gesamte Breite des Silos erstreckt, daß eine längs der gesamten Lagerfläche sowie diese quer überspannende und unter die Brücke mit dem Ablegeband hindurch verfahrbare Rücknahmebrücke mit wenigstens einem längs der Brücke verfahrbaren und rotierend antreibbaren Schaufelrad sowie einem durch das Schaufelrad hindurchgeführten Brückenförderband vorgesehen ist, welches abwurfseitig über einen in Mittellängsrichtung des Silos verlaufenden antreibbaren Förderer endet, der durch einen Düker unter die Lagerfläche hindurch zu einem Weiterförderer außerhalb der Silofläche geführt ist.

Durch die vorgenannte Ausgestaltung des Silos genügt zu dessen Beschickung nur ein auf einer Längsseite des Silos außerhalb des Silos angeordneter Zubringerförderer, von dem die Feldfrüchte mittels der mit dem Ablegeband ausgerüsteten Brücke an jede Stelle der Lagerfläche transportiert und abgelegt werden können.

Dabei ist es nicht erforderlich, daß die mit dem Ablegeband ausgerüstete Brücke bis zu den stirnseitigen Enden der Lagerfläche verfahrbar ist, sondern es genügt ein von den stirnseitigen Enden des Silos um die Länge des Ablegebandes verkürzter geradliniger Fahrweg, ohne daß die Brücke verschwenkt werden muß. Die längs der Lagerfläche verfahrbare und im Bereich der Stirnseite des Silos verschwenkbare Rücknahmebrücke kann dabei unter der Brücke mit dem Ablegeband hindurch verfahren werden, so daß eine gegenseitige Behinderung nicht erfolgt. Die von der Lagerfläche umschlossene langgestreckte Freifläche kann sehr schmal gehalten werden, so daß eine günstige Ausnutzung der gesamten Grundfläche des Silos erzielt wird, da diese Freifläche nur so breit sein muß, daß die Abstützung des einen Endes der Rücknahmebrücke und das der Rücknahme dienende antreibbare Förderband untergebracht werden können, welches durch den beschriebenen Düker hindurchgeführt ist, um eine Unterbrechung der Lagerfläche zu vermeiden und somit in jeweils gleichbleibender Richtung längs der Lagerfläche die Einlagerung der Feldfrüchte sowie deren Austrag vornehmen zu können.

Zweckmäßig ist es, wenn die verfahrbare Rücknahmebrücke mit zwei im Abstand längs der Brücke verfahrbaren Schaufelrädern ausgerüstet ist. Hierdurch kann trotz der seitlichen Abböschungen des auf der Lagerfläche befindlichen Haufwerkes stets eine gleiche Menge der Feldfrüchte pro Zeiteinheit rückgenommen und dem für die Rücknahme vorgesehenen entlang der Mittellängslinie des Silos verlaufenden Förderer zugeleitet werden. Dabei ist es besonders günstig, wenn die beiden Schaufelräder über lösbare Koppelstangen in einem etwa der halben Breite der Lagerfläche entsprechenden Abstand miteinander verbunden sind. Wenn das eine Schaufelrad mit höchstem Füllungsgrad im Kronenbereich des Guthaufens befindet sich das andere Schaufelrad in der Randzone des Guthaufens und kann dort nur geringe Mengen der Feldfrüchte aufnehmen. Bei der gleichmäßigen Verfahrbewegung der Schaufelräder längs der sie tragenden Brücke gelangt das zunächst im Kronenbereich arbeitende Schaufelrad zunehmend in den Böschungsbereich mit abnehmender Haufwerkshöhe, während das andere Schaufelrad in Richtung zum Kronenbereich des Haufwerkes, also der zunehmenden Guthöhe bewegt wird und somit der Füllungsgrad des einen Schaufelrades abnimmt, während der des anderen zunimmt. Bei einer Koppelung der Schaufelräder ist lediglich eine Antriebseinrichtung für die Verfahrbewegung der Schaufelräder längs der sie tragenden Brücke erforderlich.

Die Zeichnung gibt ein Ausführungsbeispiel der Erfindung in schematischer Darstellung wieder.

Es zeigen:
Fig. 1 eine Draufsicht auf einen Silo gemäß der Erfindung,
Fig. 2 einen Schnitt entlang der Schnittlinie G-G in Fig. 1,
Fig. 3 einen Schnitt entlang der Schnittlinie H-H in Fig. 1, wobei angenommen ist, daß sich die Rücknahmebrücke in der Schnittebene befindet.

6

Aus der Draufsicht der Fig. 1 ist sehr deutlich der Grundriß des offenen Silos mit der insgesamt mit 1 bezeichneten langrunden Lagerfläche und dem darauf befindlichen Haufwerk 2 erkennbar. Die Lagerfläche 1 umchließt dabei eine in dem Beispiel sehr schmale langgestreckte Freifläche 3.

Das auf der Lagerfläche 1 befindliche Haufwerk 2 der Feldfrüchte bedeckt in dem dargestellten Beispiel den größten Teil der Lagerfläche 1, so daß nur ein relativ kurzer Abschnitt 1a von den Feldfrüchten unbelegt ist.

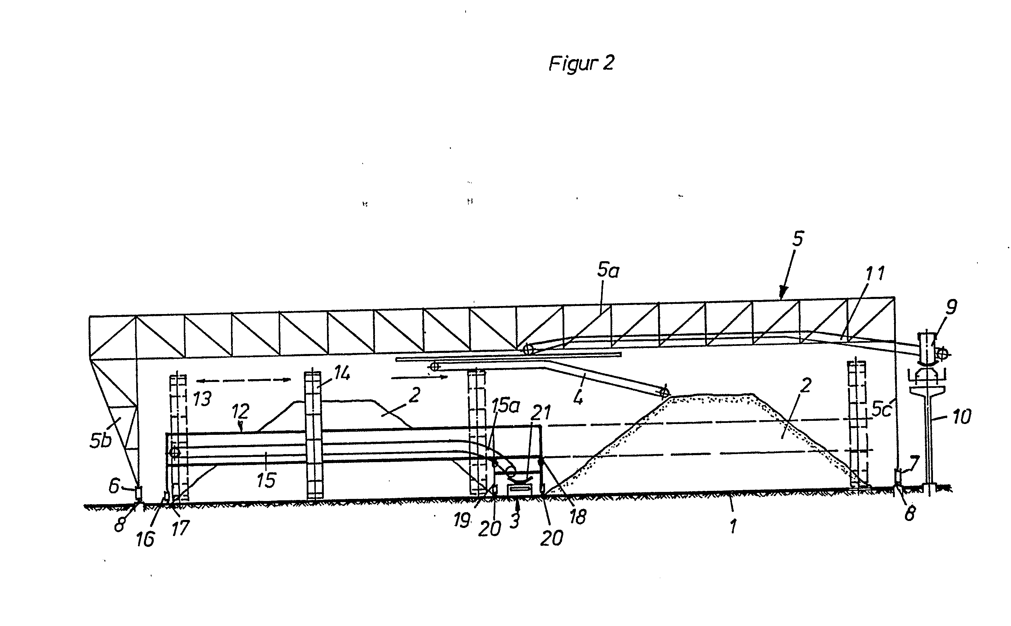

Über die gesamte Breite des Silos erstreckt sich eine mit einem Ablegeband 4 ausgerüstete, insgesamt mit 5 bezeichnete Brücke, die besonders deutlich aus der Fig. 2 hervorgeht. Die Brücke 5 weist in dem dargestellten Beispiel einen fachwerkartigen Brückenkörper 5a auf, welcher sich über seitliche Stützen 5b und 5c und an diesen angeordneten Fahrwerken 6 bzw. 7 auf entlang der Längsseiten des Silos angeordneten Schienen 8 abstützt. Die Brücke 5 ist längs des Silos über einen in der Zeichnung nicht wiedergegebenen Antrieb hin und her verfahrbar, und zwar bis in den Bereich der Radien der Lagerfläche 1, so daß das an der Brücke 5 gehaltene Ablegeband 4 die Feldfrüchte in dem radialen Bereich der Lagerfläche 1 ablegen kann.

Das Ablegeband 4 ist in bekannter Weise an der Unterseite des Brückenkörpers 5a verschwenkbar und längs zu sich selbst verfahrbar gehalten. Zur Zuführung der Feldfrüchte auf das Ablegeband 4 dient ein außerhalb der Lagerfläche 1 auf einer Längsseite des Silos vorgesehener Zubringerförderer 9, welcher auf Stützen 10 gehalten ist und sich etwa in Höhe des Brückenkörpers 5a erstreckt. Über eine längs des Zubringerförderers 9 verfahrbare und in der Zeichnung nicht im einzelnen wiedergegebene Übergabeeinrichtung gelangen die Feldfrüchte auf den in dem Brückenkörper 5a angeordneten Brückenförderer 11, dessen Abwurfende oberhalb des Ablegebandes 4 angeordnet ist.

Zur Rücknahme der in dem Silo eingelagerten Feldfrüchte dient eine insgesamt mit 12 bezeichnete Rücknahmebrücke, die sich im Gegensatz zu der Brücke 5 nur über die Breite einer Lagerfläche erstreckt und mit von ihr getragenen umlaufend angetriebenen Schaufelrädern 13 und 14 ausgerüstet ist. Die Schaufelräder 13 und 14 sind übereinstimmend ausgebildet und in bekannter Weise mit kratzerförmigen Schaufeln und einem den Schaufeln zugeordneten, der Krümmung des Rades angepaßten ortsfesten Boden ausgerüstet, welcher im oberen Bereich des Schaufelrades eine Durchtrittsöffnung aufweist, durch welche die Feldfrüchte über eine Überleiteinrichtung auf einen in der Rücknahmebrücke 12 angeordneten Brückenförderer 15 überführt werden.

Die Brücke 12 ist an ihrem einen sich entlang der Außenkontur der Lagerfläche 1 bewegenden Ende mit einem Fahrwerk 16 ausgerüstet, welches sich auf einer Schiene 17 abstützt. Das der Mittellängslinie des Silos zugekehrte Ende der Brücke 12 ruht dagegen auf einem Drehkranz 18, der sich seinerseits über ein Fahrwerk 19 auf Schienen 20 abstützt. Zwischen den Schienen 20, welche die langgestreckte Freifläche zwischen den längsseitigen Lagerflächen begrenzt, ist ein Förderer 21 erkennbar, über welchem das nach unten abgewinkelte Ende 15a des Brückenförderers 15 liegt, so daß die über dem Brückenförderer 15 auf den Förderer 21 überführten Feldfrüchte nur über eine geringe Fallhöhe auf den Förderer 21 gelangen.

Der Förderer 21 erstreckt sich über die gesamte Länge der Freifläche 3 zwischen den Lagerflächen und ist in dem in Fig. 1 rechten Abschnitt durch einen Düker unter die Lagerfläche hindurch bis zu einem Weiterförderer 22 geführt.

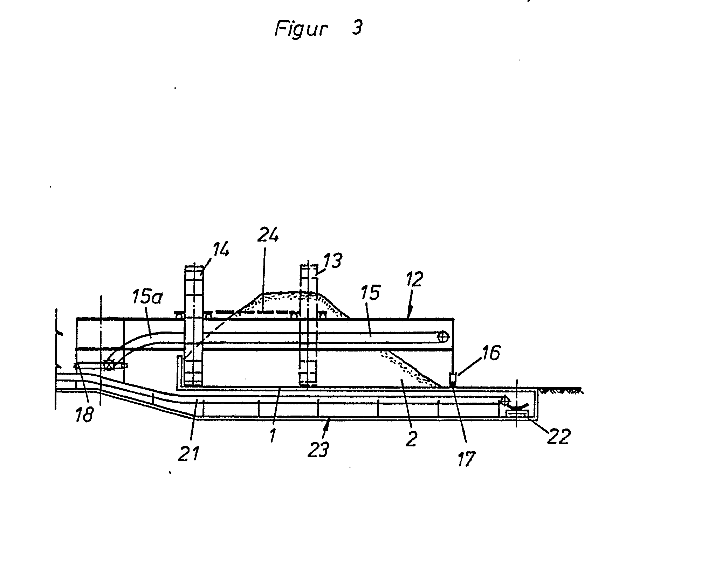

Der insgesamt mit 23 bezeichnete Düker ist besonders deutlich aus der Fig. 3 ersichtlich.

Die Zeichnung läßt erkennen, daß die Brücke 12 mit den Schaufelrädern 13 und 14 ohne Schwierigkeiten unter die Brücke 5 hindurch verfahrbar ist, so daß die Brücken sich bei ihrer Bewegung nicht behindern und in jeder beliebigen Stellung zueinander für die Beschickung des Silos einerseits sowie für dessen Entleerung andererseits in die notwendigen Arbeitsstellungen überführt werden können. Auch die Abförderung der Feldfrüchte aus dem Silo führt zu keinerlei Behinderung der kontinuierlichen und jeweils in der gleichen Richtung erfolgenden Beschickung und Rücknahme der Feldfrüchte.

Durch die Anordnung der beiden Schaufelräder 13 und 14 auf der Brücke 12 wird bei entsprechender Einstellung des Abstandes der beiden Schaufelräder während der Verfahrbewegungen der Schaufelräder längs der Brücke 12 etwa stets die gleiche Menge der Feldfrüchte trotz der Abböschungen des Guthaufens in der bereits einleitend beschriebenen Weise entnommen. Damit die Schaufelräder 13 und 14 ihren jeweiligen Abstand beibehalten, können die in Fig. 3 schematisch dargestellten Fahrwerke der beiden Schaufelräder 13 und 14 über eine lösbare Koppelstange 24 miteinander verbunden sein. Dies hat den weiteren Vorteil, daß nur ein Antrieb für die seitliche Verfahrbewegung der Schaufelräder 13 und 14 erforderlich ist.

10

## Ansprüche

1. Offener Silo für Feldfrüchte, insbesondere Zuckerrüben, mit einer in der Draufsicht eine langgestreckte Freifläche umschließenden hypodromartig verlaufenden Lagerfläche, einem längsseitigen Zubringerförderer, einer die Lagerfläche überspannenden Brücke mit einem vom Zubringerförderer beschickbaren Brückenförderer und einem an der Brücke schwenkbaren und längs zu sich selbst verfahrbaren Ablegeband sowie einer längs der Lagerfläche verfahrbaren Rücknahmeeinrichtung, die mit einer in Mittellängsrichtung des Silos verlaufenden Abfördereinrichtung zusammenwirkt, d a d u r c h g e k e n n z e i c h n e t, daß die mit dem Ablegeband (4) ausgerüstete Brücke (5) sich über die gesamte Breite des Silos erstreckt, daß eine längs der gesamten Lagerfläche (1) sowie diese quer überspannende und unter die Brücke (5) mit dem Ablegeband (4) hindurch verfahrbare Rücknahmebrücke (12) mit wenigstens einem längs der Brücke verfahrbaren und rotierend antreibbaren Schaufelrad (13;14) sowie einem durch das Schaufelrad hindurchgeführten Brückenförderband (15) vorgesehen ist, welches abwurfseitig über einen in Mittellängsrichtung des Silos verlaufenden antreibbaren Förderer (21) endet, der durch einen Düker (23) unter die Lagerfläche hindurch zu einem Weiterförderer (22) außerhalb der Silofläche geführt ist.

2. Silo nach Anspruch 1, d a d u r c h g e k e n n z e i c h n e t, daß die verfahrbare Rücknahmebrücke (12) mit zwei im Abstand längs der Brücke verfahrbaren Schaufelrädern (13,14) ausgerüstet ist.

3. Silo nach Anspruch 1 und 2, d a d u r c h  g e-
k e n n z e i c h n e t, daß die beiden Schaufelräder (13,14) über lösbare Koppelstangen (24) in
einem etwa der halben Breite der Lagerfläche (1)
entsprechenden Abstand miteinander verbunden sind.

Figur 1

Figur 2

Figur 3

0246525

**EUROPÄISCHER RECHERCHENBERICHT**

Nummer der Anmeldung

EP 87 10 6765

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | DE-A-2 120 258 (OPPERMANN & DEICHMANN) <br> * Seite 10, Zeilen 8-25; Figuren 1-4 * | 1 | B 65 G 63/00 <br> B 65 G 65/20 <br> A 01 F 25/00 |
| | --- | | |
| Y | DD-A- 139 564 (MASCHINENFABRIK ANDRITZ) <br> * Seite 6, Zeilen 8-27; Figuren 1-8 * | 1 | |
| | --- | | |
| A | DE-A-2 541 048 (DEUTSCHE BABCOCK) <br> * Seite 7, Zeilen 2-6; Figur 2 * | 1-3 | |
| | --- | | |
| A | AU-B- 415 655 (POHLIG-HECKEL-BLEICHERT VEREINIGTE MASCHINENFABRIKEN) <br> * Seite 3, Zeile 23 - Seite 4, Zeile 11; Figuren 1-3 * | 1-3 | RECHERCHIERTE SACHGEBIETE (Int. Cl. 4) |
| | --- | | A 01 F 25/00 <br> B 65 G 3/00 <br> B 65 G 63/00 <br> B 65 G 65/00 |
| A | US-A-3 224 604 (ADLER et al.) <br> * Spalte 2, Zeile 68 - Spalte 3, Zeile 13 * | 1-3 | |
| | ----- | | |

Der vorliegende Recherchenbericht wurde für alle Patentansprüche erstellt

| Recherchenort | Abschlußdatum der Recherche | Prüfer |
|---|---|---|
| BERLIN | 05-08-1987 | SIMON J J P |